# DEMANDE DE BREVET EUROPEEN

(11) **EP 2 112 624 A1**
(43) Date de publication de la demande: **28.10.2009**
(21) Numéro de dépôt: 09158637.0
(22) Date de dépôt: 23.04.2009
(51) Int. Cl.: G06Q 10/00

(54) **Procédé pour gérer des equipements cryptographiques avec une administration unifiée**

(30) Priorité: 25.04.2008 FR 0802340
(71) Demandeur: Thales, 92200 Neuilly-sur-Seine (FR)
(72) Inventeur: Maximilien, Benoit, 92700, Colombes (FR); Auge, M. Emmanuel, 92700, Colombes (FR)
(74) Mandataire: Dudouit, Isabelle

(57) **Abrégé**

Système de gestion (1) unifiée et universelle d'un ou plusieurs équipements de cryptographie **caractérisé en ce qu**'il comporte en combinaison au moins les éléments suivants :
➢ Un portail fédérateur (2) adapté à permettre à un utilisateur d'accéder à différents services,
➢ Une ou plusieurs interfaces (5) permettant l'échange d'informations entre le système de gestion et des équipements externes audit système (6, 7),
➢ Un module ou plusieurs modules (3) comprenant un ou plusieurs sous-modules ou briques technologiques adaptées à réaliser une gestion unifiée et universelle.

## Description

L'invention concerne un procédé permettant de gérer des équipements cryptographiques présents au sein d'un réseau. Elle est utilisée notamment pour obtenir des systèmes gérés automatiquement tout en respectant les garanties de sécurité requises dans la plupart des applications mettant en oeuvre un chiffrement de données.

Elle s'applique, notamment, dans le domaine des transactions bancaires sécurisées.

Un des problèmes existant dans le domaine de la sécurité des systèmes d'information concerne la gestion des équipements cryptographiques dans un réseau.

En général, les réseaux comprennent des centres de gestion spécifiques qui, en se multipliant, reportent un poids considérable sur les opérateurs (utilisateurs gouvernementaux, utilisateurs Grands comptes tels que les industriels, les banques, etc.). Il existe donc actuellement un besoin de trouver une solution de gestion ajustable permettant de rationaliser à la fois les moyens humains et matériels des clients.

En matière de sécurité, il est primordial de gérer des équipements de sécurité. En effet, un certain nombre de services est nécessaire pour l'administration des équipements cryptographiques qu'ils soient civils ou de défense. Bien qu'il existe des spécifications du fait des protocoles utilisés pour chaque application, les systèmes comprennent des briques technologiques ayant chacune une fonctionnalité bien définie en fonction d'un besoin ou d'une application et/ou des services similaires dans tous les systèmes de gestion. La manière dont ils sont mis en oeuvre diffèrent d'une application à une autre.

Une autre problématique rencontrée dans le domaine de la sécurité est le souhait des utilisateurs de disposer d'une interface homme machine ou IHM unique, ergonomique et modulable selon la mission qu'ils ont à accomplir ou des besoins donnés d'une application. Autrement dit, chaque brique technologique a sa propre interface et la présentation de toutes les données remontées ne permet plus une interprétation correcte des événements réseaux ou de sécurité. Face à cette multiplication d'interfaces, il existe un besoin de développer un outil unique qui concentre, synthétise, corrèle éventuellement, et affiche les données nécessaires à l'utilisateur.

Ces problèmes sont rencontrés, par exemple, dans les applications suivantes : Chiffreurs IP (Internet Protocol) haut débit, chiffreurs d'artères en particulier Ethernet, Pare-feux, etc.

Différents systèmes existent dans l'art antérieur qui proposent des solutions de gestion modulaires. Toutefois, ces systèmes dans la plupart des cas entraînent des gestions figées, hétérogènes, spécifiques et complexes. Ainsi, les produits de sécurité réseaux connus du Demandeur, présentent la particularité de mettre en oeuvre des éléments propriétaires en terme d'interface, de protocole, d'algorithme, d'utilisation et de contextes d'emploi. Ces spécificités empêchent une interopérabilité et une mutualisation dans le fonctionnement des dispositifs.

Il existe donc un besoin de rationaliser les moyens tant matériels qu'humains mis en oeuvre dans les systèmes. A titre d'exemple, les briques technologiques utilisées pour la gestion des équipements réseaux et leur supervision qui sont connues de l'Homme du métier, sont par exemple, :
Opentrust PKI, Unicert (Cybertrust), NAGIOS (Logiciel libre), TIVOLI / NETCOOL (IBM), HPOV-NNM de Hewlett-Packard, Openview de Hewlett-Packard, Unicenter Networks et Systems Management de Computer Associates, CiscoWorks et Security Device Manager de Cisco Systems, Patrol Dashboard de BMC Software, SNMPC de Castlerock, Vistalnsight de InfoVista, etc.

Par ailleurs, les briques technologiques qui sont aussi connues de l'homme du métier, pouvant être citées pour l'administration de la sécurité sont par exemple : Network Security Policy System, Security Management System et Guided Response System de ExaProtect (l'offre comprend le produit Security Policy Management suite au rachat de la société Solsoft), Enterprise Security Manager de ArcSight, Security Manager de NetIQ, Monitoring, Analysis and Response System de Cisco Systems, InSight Suite de Consul risk management, Security Information Manager de Symantec, eTrust Security Command Center de Computer Associate (CA), Security Manager de Intellitactics, nFX Open Security Platform de netForensics, Sentinel de Novell (ex-produit phare de e-Security), enVision de Network Intelligence, Enterprise Security Analyzer de eIQnetworks.

L'idée de la présente invention repose notamment sur une structuration de la gestion des équipements cryptographiques en services unitaires et indépendants, qui sont fédérés via une interface homme/machine orientée « métier », c'est-à-dire modulable suivant les droits attachés à une fonction et la mission d'un utilisateur. Elle offre notamment l'avantage de satisfaire tous ou au moins une majorité des besoins de la gestion des équipements cryptographiques.

L'invention concerne un système de gestion unifiée et universelle d'un ou plusieurs équipements de cryptographie caractérisé par une architecture orientée service en ce qu'il comporte en combinaison au moins les éléments suivants :
➢ Un portail fédérateur adapté et adapable au métier de l'utilisateur ou de l'opérationnel à permettre à un utilisateur d'accéder à différents services élémentaires et indépendants,
➢ Ces services élémentaires et indépendants sont des briques technologiques modulaires comprenant un ou plusieurs sous-modules choisis parmi la liste suivante :
   ➢ Un module de gestion des Secrets (production des clés, gestion des annuaires, ...),
   ➢ Un module de Gestion de la Politique de Sécurité (politique de protection, politique de contrôle d'accès, ...),
   ➢ Un module opérationnel OPS,
   ➢ Un module chargé de l'Administration des équipements (pré-personnalisation, personnalisation, enregistrement, inscription,...),
   ➢ Un module de Supervision (gestion des alarmes, gestion des faits techniques, des incidents et des événements non sollicités, corrélation d'événements, ...)
   ➢ Un module d'Audit (contrôle de la bonne application de la Politique de Sécurité : logs, politique appliquée et remontée par les équipements, ...)
   ➢ Un module de Suivi (gestion de parcs, état et localisation des équipements, ...),
   ➢ Un module d'Authentification (gestion des profils utilisateurs, administrateurs, auditeurs, ... authentification des intervenants, etc....).
➢ Une ou plusieurs interfaces permettant l'échange d'informations entre le système de gestion et des équipements cryptographiques externes audit système.

Un module ou brique technologique est, par exemple, constitué de trois couches correspondant à un service unitaire. Il peut comporter au moins les trois couches suivantes : une première couche correspondant à un module de présentation interface homme machine, une deuxième couche correspondant aux traitements souhaités et une troisième couche correspondant à une base de données.

Le système a une architecture de type orienté service SOA composée de briques technologiques élémentaires et indépendentes et peut comporter un ensemble de briques ou modules adapté à l'administration d'équipements cryptographiques et l'élaboration de « secrets » pour le domaine de la sécurité des systèmes d'information comprenant un module d'authentification, un module adapté à générer des secrets un module d'audit.

Selon un mode de réalisation, le système comporte au moins un ensemble de briques ou de modules comprenant les modules suivants :
Module AUTH : pour s'authentifier et accéder aux services,
Module SECRET : pour accéder aux secrets produits et gérer leur affectation, générer des clés associées,
Module AUDIT : pour consulter les journaux locaux (Logs),
Module POLITIQUE : pour définir une politique d'accès à l'équipement (administrateurs et les droits),
Module ADMIN : pour fournir les données de pré-personnalisation et les affecter aux équipements,
Module SUIVI : pour maintenir à jour la base d'état des équipements (état, suivi des ACSSI, mise à jour éventuelle, ...).

Selon un autre mode de réalisation, le système comporte un ensemble de briques ou de modules comprenant les modules suivants :
Module AUTH : pour s'authentifier et accéder aux services,
Module SECRET : pour accéder aux secrets produits et gérer leur affectation, générer des clés associées,
Module AUDIT : pour consulter les journaux locaux (Logs),
Module POLITIQUE : pour définir une politique d'accès à l'équipement (administrateurs et les droits),
Module ADMIN : pour fournir les données de pré-personnalisation et les affecter aux équipements,
Module SUIVI : pour maintenir à jour la base d'état des équipements (état, suivi des ACSSI, mise à jour éventuelle, ...).

Selon un autre mode le système peut comprendre un ensemble de briques ou de modules comprenant les éléments suivants :
AUTH : pour s'authentifier et accéder aux services,
POLITIQUE : pour définir les politiques des équipements (politique de chiffrement, politique de certification, politique d'accès : droits et rôles des intervenants, politique de protections, ...),
AUDIT : pour consulter les journaux locaux (Logs).

Selon un mode de réalisation, le système comprend un ensemble de briques ou de modules comprenant les éléments suivants :
AUTH : pour s'authentifier et accéder aux services,
AUDIT : pour consulter les journaux locaux (Logs),
POLITIQUE : pour accéder à la politique à attribuer à l'équipement
OPS: pour définir les paramètres opérationnels complémentaires de l'équipement (plan de fréquence, répertoire téléphonique, table de routage ...), paramètres liés à la mission opérationnelle de l'équipement.
ADMIN: pour fournir à l'équipement toutes les données de configuration ou mettre à jour ces paramètres.

Le système peut aussi comporter un ensemble de briques composées des modules suivants :
AUTH : pour s'authentifier et accéder aux services,
POLITIQUE : pour accéder à la politique de sécurité IPSec (partie de la politique à attribuer à l'équipement à gérer),
SECRET : pour accéder aux secrets définis et gérer leur affectation,
OPS : pour définir les paramètres opérationnels complémentaires de l'équipement (table de routage IP, ...).
ADMIN: pour inscrire les équipements sur le système de gestion, pour les personnaliser et leur fournir les fichiers de configuration, pour les piloter à distance,
SUPERV: pour disposer d'une vision, sous différentes formes, de l'état du service et des équipements en charge du service (alarmes, cartographie, voyants d'état, performances...),
AUDIT : pour consulter les journaux et base de données des entités contribuant au maintien du service (Logs locaux, Logs d'autres entités, Logs des équipements cryptographiques supervisés, MIBs réseaux, ...) et pour vérifier que la politique appliquée est bien conforme à la politique définie ;
SUIVI : pour maintenir à jour la base d'états des équipements (états, suivi des composants sensibles, mise à jour logicielle éventuelle, ...).

L'objet de l'invention concerne aussi un système **caractérisé en ce qu**'il comporte un ensemble de briques composées des modules suivants :
AUTH: pour s'authentifier et accéder aux services,
POLITIQUE : pour disposer de la politique sensée être appliquée par les équipements (la consigne),
AUDIT : pour consulter les journaux et les politiques des équipements et les analyser.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un exemple d'architecture qui présente le concept et la décomposition en couches propre à un système d'administration selon l'invention de gestion unifiée et universelle des équipements cryptographiques,
- La figure 2, un exemple de concept d'applications « 3 tiers » qui est toujours composé d'une couche interface homme machine, IHM, une couche traitement et couche données (ou base de données),
- La figure 3 montre l'ensemble d'une structure d'une architecture orientée services, et
- Les figures 4 à 14 différents exemples de mise en oeuvre du système décrit à la figure 1.

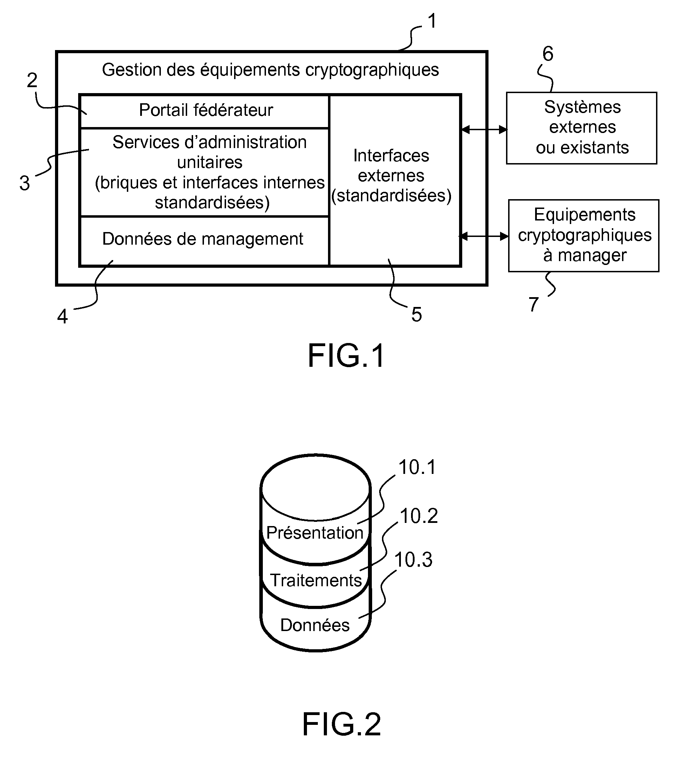

La figure 1 décrit un exemple d'architecture de système selon l'invention s'appuyant sur un concept technique modulaire, ajustable et évolutif.

Le système selon l'invention comprend un module 1 de gestion des équipements cryptographiques comportant au moins les éléments disposés en couches suivants :
➢ Un portail fédérateur 2 ayant la fonction d'une porte d'entrée ou portail d'accès permettant à un utilisateur d'accéder aux différents services utiles pour la gestion des équipements cryptographiques, par exemple aux différents services de gestion unitaires offerts par des briques technologiques représentées par la suite par des modules et détaillés ci-après au moyen d'exemples de mise en oeuvre.

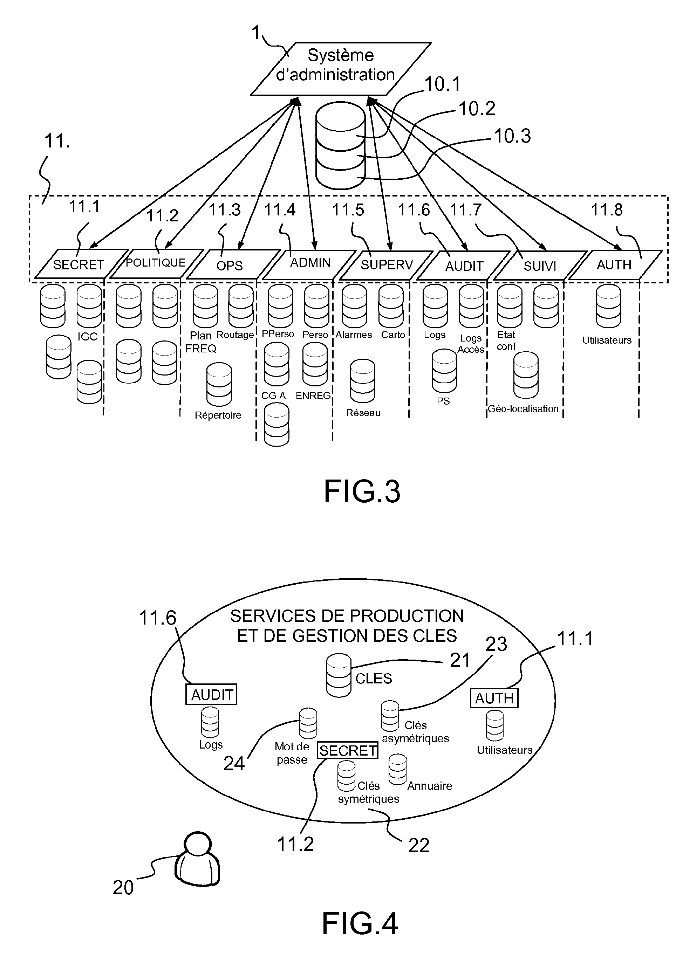

Ainsi le portail 2 est adapté pour personnaliser le contenu des interfaces afin de les adapter à la mission ou aux besoins d'un utilisateur dont certains exemples sont détaillés à titre illustratif en relation avec les figures suivantes:
➢ Un Module 3 composé d'un ensemble de briques technologiques qui représentent les services élémentaires mis en oeuvre pour la gestion de tous produits de sécurité cryptographiques, et qui comporte un ou plusieurs des éléments suivants (figure 3) :
   ➢ Un module de gestion des Secrets (production des clés IGC Infrastructure à Gestion de clés, gestion des annuaires, ...), 11.1
   ➢ Un module de Gestion de la Politique de Sécurité (politique de protection, politique de contrôle d'accès, ...), 11.2
   ➢ Un module opérationnel OPS 11.3 (OPen Services : module laissé ouvert aux besoins spécifiques du client ou des opérationnels ) contenant par exemple le ou les plans de fréquences, le plan de routage, le répertoire, etc.
   ➢ Un module chargé de l'Administration des équipements (pré-personnalisation, personnalisation, enregistrement, inscription,...), 11.4
   ➢ Un module de Supervision (gestion des alarmes, gestion des faits techniques, des incidents et des événements non sollicités, corrélation d'événements, ...) 11.5
   ➢ Un module d'Audit (contrôle de la bonne application de la Politique de Sécurité : logs, politique appliquée et remontée par les équipements, ...) 11.6
   ➢ Un module de Suivi (gestion de parcs, état et localisation des équipements, ...), 11.7
   ➢ Un module d'Authentification (gestion des profils utilisateurs, administrateurs, auditeurs, ... authentification des intervenants, etc...), 11.8
   ➢ Un module 4 de gestion des données.

Les différents modules sont représentés pour des raisons de simplification par la référence 3 sur la figure 1 et détaillés à la figure 3.

Le portail fédérateur 2, le module d'administration comprenant les différentes briques technologiques 3 et le module 4 de gestion des données sont en liaison avec une ou plusieurs interfaces externes 5 connues de l'Homme du métier et standardisées.

Cette ou ces interfaces externes 5 sont utilisées pour la communication et l'échange de données avec, soit des systèmes externes 6, soit des équipements de cryptographie 7 à gérer. Celles-ci s'appuient sur des standards connus tels que SNMP (Simple Network Management Protocol), SYSLOG (protocole d'échange pour journaux d'événements), etc...

L'architecture décrite à la figure 1 permet notamment :
➢ Une gestion multi produits, multi contextes et multi niveaux ;
➢ Une standardisation des échanges entre les briques internes à la gestion, et la gestion et les systèmes externes.

Les services OPS sont réservés aux services particuliers des utilisateurs et ils sont liés à son activité (définition de plan de fréquences pour ses communications haute fréquence HF, paramétrage du plan de fréquences électromagnétiques pour un radar, définition de ses tables de routage IP, définition de sa communauté c'est à dire des paramètres d'un groupe d'utilisateurs avec lesquels une communication sera établie, etc.)

La figure 2 schématise un exemple de service unitaire en trois couches.

Le concept d'applications 3 tiers correspond à un logiciel composé d'une première couche 10.1 correspondant un module de présentation Interface Homme Machine (IHM), un module 10.2 correspondant aux traitements et un module 10.3 correspondant à une base de données.

Chaque module ou brique technologique est composée suivant un format logiciel en trois-tiers et chaque cylindre constitué ainsi peut lui-même être décomposé en sous-services, ou plus petits cylindres eux-mêmes décomposés en trois tiers. Cette découpe et les services sont connus de l'Homme du métier et ne seront pas détaillés.

Sur la figure 3 a été représenté un exemple d'ensemble de gestion comprenant un portail unique d'accès 11 en liaison avec différentes applications 11.i. Les applications sont détaillées dans les figures suivantes et peuvent mettre en oeuvre une ou plusieurs des fonctionnalités suivantes : 11.1 la génération de secret comprenant par exemple un annuaire, un module de gestion et de production des clés de chiffrement, un module de sécurité et de cryptographies pour les réseaux, 11.2 la politique de sécurité choisie par un utilisateur, un module 11.3 OPS comprenant des modules de routage, de plans de fréquence et aussi des répertoires, un module Administrateur 11.4, un module de supervision 11.5 incluant par exemple des alarmes, une cartographie etc., un module d'audit 11.6 incluant les moyens de connexion des utilisateurs responsables des audits, un module de suivi 11.7 des équipements de leur bon fonctionnement, et un module d'authentification 11.8 des utilisateurs du système.

Les figures suivantes représentent des exemples d'adaptation de l'architecture du système selon l'invention en fonction des rôles et des missions décidés préalablement.

Sur la figure 4 est représentée une brique faisant partie du système de gestion selon l'invention et qui a notamment pour fonction d'élaborer des « Secrets ». Cette mission est confiée au responsable chiffre 20 (l'officier de sécurité ou à la personne en charge de générer les clés qui peut être le responsable de la sécurité au sein d'une entreprise).

La personne responsable va mettre en oeuvre les modules suivants :
Le module 11.1 authentification pour s'authentifier et accéder aux services,
Le module 11.2 secret pour produire et générer les secrets, par exemple les clés 21, clés symétriques ou asymétriques pour protéger les données échangées, les mots de passe 24 en fonction des personnes,
Le module 11.6 ou Audit pour consulter les journaux locaux qui recueillent l'ensemble des événements (par exemple : les incidents réseaux), alarmes (par exemple : les alarmes liées à la sécurité), les états de fonctionnement (des équipements cryptographiques). En général, tous ces faits techniques sont consignés, datés et enregistrés dans une base de données non représentée sur la figure pour des raisons de simplification. Par la suite, le responsable 20 peut alerter, corréler (ce qui peut être fait aussi par un outil d'analyse afin de détecter un dénis de services ou bien des attaques logiques systèmes, etc...), diagnostiquer une panne, procéder à une réparation ou bien ignorer les derniers événements.

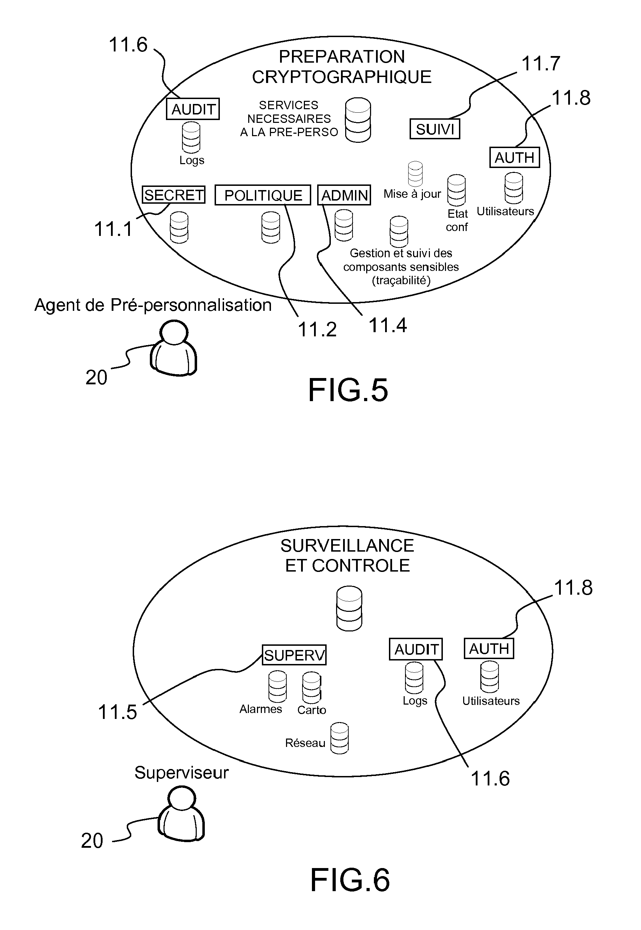

La figure 5 représente un deuxième exemple d'utilisation du système selon l'invention qui permet à un client d'un système de personnaliser ses équipements et de les préparer cryptographiquement. Par exemple, la préparation cryptographique va impliquer l'enregistrement de l'équipement (affectation de l'équipement auprès d'un organisme, d'un système de gestion (inscription à un management avec allocations des autorisations) avec ou bien auprès d'un utilisateur, la mise à la clé (injection des premiers secrets), la mise à jour logicielle, et la définition d'une politique d'accès choisie ou de sécurité (liste des contacts possibles entre plusieurs équipements, paramètres réseaux pour les échanges autorisés, etc...).

Dans cette mise en oeuvre du système selon l'invention, le client va utiliser les modules suivants :
Module 11.8 AUTH : pour s'authentifier et accéder aux services,
Module 11.1 SECRET : pour accéder aux secrets produits et gérer leur affectation, générer des clés associées,
Module 11.6 AUDIT : pour consulter les journaux locaux (Logs),
Module 11.2 POLITIQUE : pour définir une politique d'accès à l'équipement (administrateurs et les droits),
Module 11. 4 ADMIN : pour fournir les données de pré-personnalisation et les affecter aux équipements,
Module 11.7 SUIVI : pour maintenir à jour la base d'état des équipements (état, suivi des ACSSI, mise à jour éventuelle, ...)

Les étapes de mise en oeuvre d'un système d'administration unifié selon l'invention effectuées par un utilisateur après authentification (module AUTH) sont, par exemple : les phases de mise à la clé, d'enregistrement (module SECRET), de paramétrage ou de configuration, d'inscription auprès d'un management (module ADMIN), de définition de la politique de sécurité (module POLITIQUE), d'audit pour s'assurer que cette dernière est bien appliquée (module AUDIT) et puis de suivi, et gestion de parcs (module SUIVI). Autrement dit, l'utilisateur personnalise en quelque sorte l'équipement, lui donne les moyens de communiquer avec sa communauté (les clés , les secrets), le fait connaître auprès de celle-ci (au moyen de son management) et le contrôle (comportement réseaux , etc...)

La figure 6 schématise un exemple d'utilisation du système selon l'invention pour surveiller, superviser et éventuellement auditer le parc d'équipements. Cette mission est en général confiée à un superviseur dont ce peut être le rôle principal ou non.

Pour mener à bien sa mission, il doit avoir accès aux services suivants :
AUTH 11.8 : pour s'authentifier et accéder aux services,
SUPERV 11.5 : pour disposer d'une vision, sous différentes formes, de l'état du service et des équipements en charge du service (alarmes, cartographie, voyants d'état, performances,...)
AUDIT 11.6 : pour consulter les journaux et base de données des entités contribuant au maintien du service (Logs locaux, Logs d'autres entités, Logs des équipements cryptographiques supervisés, MIBs réseaux, ...).

Dans ce cas, l'utilisateur après s'être authentifié (module AUTH) va superviser son réseau en utilisant différents outils (briques technologiques de son module SUPERV) afin de contrôler la remontée d'informations (événements, logs, alarmes, incidents réseaux, ...) à partir d'une base de données (liste de tous ces équipements enregistrés, ...), de mettre à jour cette base et procéder ou non à des réparations réseaux et / ou de sécurité (suite aux informations recueillies (module AUDIT).

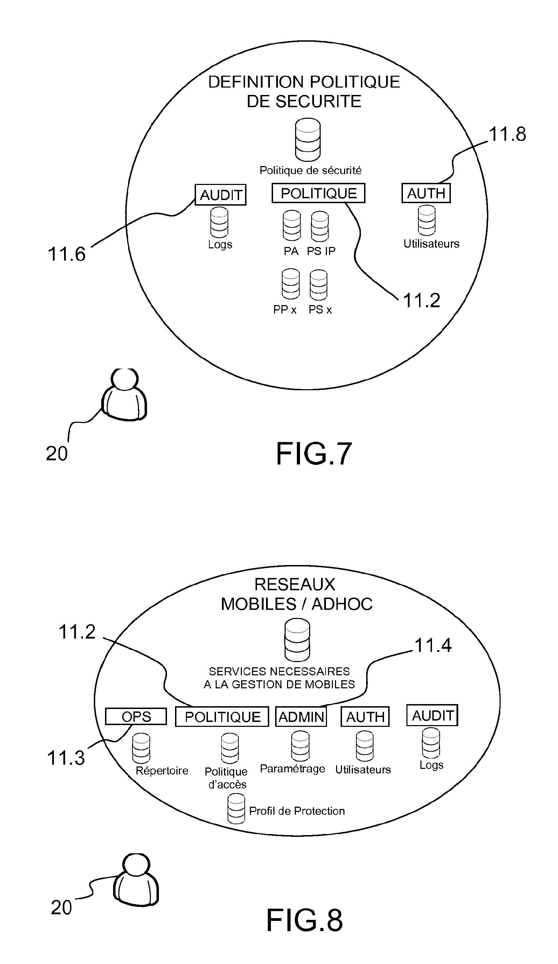

La figure 7 représente un exemple d'application de la structure selon l'invention pour définir la politique de sécurité en regard des besoins systèmes, des besoins des équipements et de leurs possibilités : c'est à dire qui a le droit de communiquer avec qui, dans quelles conditions (avec quel niveau de service, ...) mais aussi comment l'équipement doit se comporter vis-à-vis des tentatives d'accès licites ou illicite (droits d'accès, etc...).

Pour mener à bien sa mission, il doit avoir accès à plusieurs services :
AUTH 11.8 : pour s'authentifier et accéder aux services,
POLITIQUE 11.2 : pour définir les politiques des équipements (politique de chiffrement, politique de certification, politique d'accès : droits et rôles des intervenants, politique de protections, ...)
AUDIT 11.6 : pour consulter les journaux locaux (Logs).

Dans ce cas, l'utilisateur après s'être authentifié définit tout d'abord la politique de sécurité qui peut se résumer à l'établissement de tunnels virtuels privés (VPN) entre deux entités autorisées à communiquer (module POLITIQUE) et puis s'assure qu'elle est correctement appliquée (module AUDIT) au moyen de différentes techniques (sondage, remontée automatique de la politique de sécurité, etc...).

La figure 8 représente un exemple de mise en oeuvre du système selon l'invention pour gérer de manière simplifiée un réseau ad hoc. Cette mise en oeuvre est en général confiée à un administrateur d'équipements cryptographiques. Ce dernier va utiliser les fonctionnalités suivantes :
AUTH 11.8 : pour s'authentifier et accéder aux services,
AUDIT 11.6 : pour consulter les journaux locaux (Logs),
POLITIQUE 11.2 : pour accéder à la politique à attribuer à l'équipement,
OPS 11.3 : pour définir les paramètres opérationnels complémentaires de l'équipement (plan de fréquence, répertoire téléphonique, table de routage, ...), paramètres liés à la mission opérationnelle de l'équipement,
ADMIN 11.4 : pour fournir à l'équipement toutes les données de configuration ou mettre à jour ces paramètres.

Dans ce cas, la mise en oeuvre effectuée par l'utilisateur 20 exploitant le réseau mobile/ad hoc/local (après authentification :module AUTH) est plus simple que pour un système de management complet car le but est de proposer des services d'administration déportée plus proche des conditions opérationnelles (utilisation du module OPS). On retrouve cependant les blocs fondamentaux qui doivent être pilotés au plus près du terrain et de ses contraintes : module POLTIQUE (pour la définition de la politique de sécurité et établir les liens entre les entités qui sont autorisées à dialoguer) , et ADMIN (afin de paramétrer les équipements suivant les spécificités réseaux :
débits, priorisation de flux, allocation de ressources, besoin de disponibilité, qualité du service, etc...).

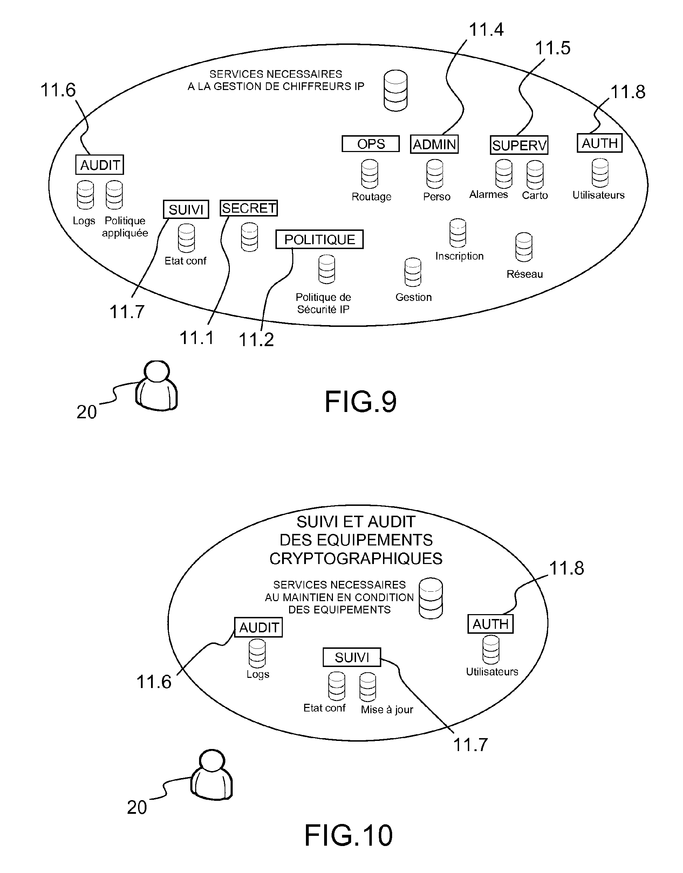

La figure 9 représente un exemple d'application mise en oeuvre par un superviseur 20 des équipements cryptographiques d'infrastructure pour la gestion de chiffreurs IP.

Pour mener à bien sa mission, l'administrateur va utiliser les fonctionnalités suivantes :
AUTH 11.8 : pour s'authentifier et accéder aux services,
POLITIQUE 11.2 : pour accéder à la politique de sécurité IPSec (partie de la politique à attribuer à l'équipement à gérer),
SECRET 11.1: pour accéder aux secrets définis et gérer leur affectation,
OPS 11.3: pour définir les paramètres opérationnels complémentaires de l'équipement (table de routage IP, ...).
ADMIN 11.4 : pour inscrire les équipements sur le système de gestion, pour les personnaliser et leur fournir les fichiers de configuration, pour les piloter à distance,
SUPERV 11.5 : pour disposer d'une vision, sous différentes formes, de l'état du service et des équipements en charge du service (alarmes, cartographie, voyants d'état, performances,...)
AUDIT 11.6: pour consulter les journaux et base de données des entités contribuant au maintien du service (Logs locaux, Logs d'autres entités, Logs des équipements cryptographiques supervisés, MIBs réseaux, ...) et pour vérifier que la politique appliquée est bien conforme à la politique définie ;
SUIVI 11.7: pour maintenir à jour la base d'états des équipements (états, suivi des composants sensibles, mise à jour logicielle éventuelle, ...).

Dans ce cas, l'administrateur a un rôle complet de gestion des équipements cryptographiques (une fois qu'il s'est authentifié : module AUTH). En effet, il doit renouveler la politique de sécurité (définie par ailleurs par l'officier de sécurité ou le responsable de la sécurité (module POLITIQUE), renouveler les clés (module SECRET), mettre à jour la configuration des équipements, (modules OPS et ADMIN), mettre à jour ses bases de données contenant les équipements qui ont été enregistrés (module ADMIN), supervise (module SUPERV) et ou auditer son système (module AUDIT).

L'exemple donné à cette figure 10 concerne l'utilisation du système selon l'invention pour préparer ou maintenir les équipements pour qu'ils puissent assurer leur mission correctement (choix de la version logiciel, opération de maintenance périodique, ...).

Pour mener à bien sa mission, le contrôleur 20 doit avoir accès à plusieurs services :
AUTH 11.8 : pour s'authentifier et accéder aux services,
SUIVI 11.5 : pour maintenir à jour la base d'état des équipements (état, suivi des ACSSI, mise à jour des logiciels, ...)
AUDIT11.6: pour consulter les journaux locaux et les journaux des équipements cryptographiques maintenus.

Dans ce cas, l'utilisateur procède au suivi et à l'audit une fois que son système a été défini.

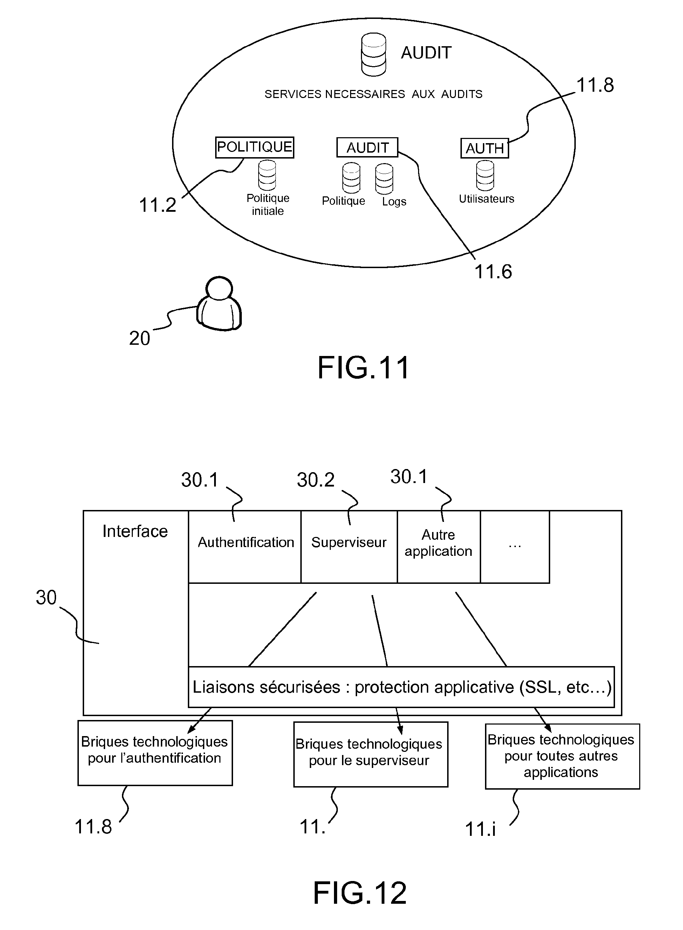

Sur cette figure 11, le système selon l'invention est mis en oeuvre pour contrôler le bon comportement des équipements et leur état par rapport aux consignes nominales et à vérifier les événements nominaux et non nominaux qu'ils ont mémorisés (logs, politique de sécurité, état, ...).

Pour mener à bien sa mission, il doit avoir accès à plusieurs services :
AUTH 11.8 : pour s'authentifier et accéder aux services,
POLITIQUE 11.2 : pour disposer de la politique sensée être appliquée par les équipements (la consigne),
AUDIT 11.6 : pour consulter les journaux et les politiques des équipements et les analyser.

Dans cas, l'utilisateur authentifié audit sa politique de sécurité une fois qu'elle a été définie et communiquée aux équipements.

La figure 12 représente un exemple d'implémentation logicielle pour une architecture SOA (Architecture Orientée Services) et des services Web. Cette implémentation comporte une interface 30, différentes applications informatiques 31.i qui permettent de traiter dynamiquement des requêtes utilisateurs souhaitant accéder à des services au travers de vues personnalisées, par exemple, JSR 268 (http://fr.wikipedia.org/wiki/JSR_168), FSR 286, WSRP (http://fr.wikipedia.org/wiki/WSRP)....

Les services sont répartis sur plusieurs machines logicielles. Les protocoles utilisés sont standards : SOAP (requêtes et données reposant sur de nombreux protocoles de transport : HTTP, SMTP, POP3, FTP, etc... ainsi le SOAP permet des échanges de données XML entre services comme des paramètres de routage, des adresses de destinataires, ...), XML (eXtended Markup Langage), WSDL (interface d'accès aux Web Services), standard UDDI (localisation dynamique des services Web) , SAML (Security Assertion Markup Language : standard de sécurité pour authentification et autorisation d'accès) , XACML description des politiques d'accès aux ressources, l'URI (mode http d'adressage de services pour le nommage des ressources ou des services), XKMS (serveur XML Key Management Specification pour dialogue avec PKIs (Infrastructure à clés publiques) et pour la gestion simplifiée des certificats numériques), ....

Le but est de définir un contrat de service entre une brique technologique et le fédérateur c'est à dire entre une entité fournisseur et une entité cliente.

Les utilisateurs disposent ainsi, via un portail unique, d'une interface personnalisée (IHM), dont l'ergonomie est adaptée à leur mission. Ils retrouvent quelle que soit leur mission une ergonomie familière (rationalisation des interfaces utilisatrices). De plus, moyennant la mise en oeuvre de principes SSO : Single Sign-On et de nouvelles technologies telle que le SAML, l'utilisateur n'a besoin de s'authentifier qu'une seule fois auprès de ce Framework modulaire.

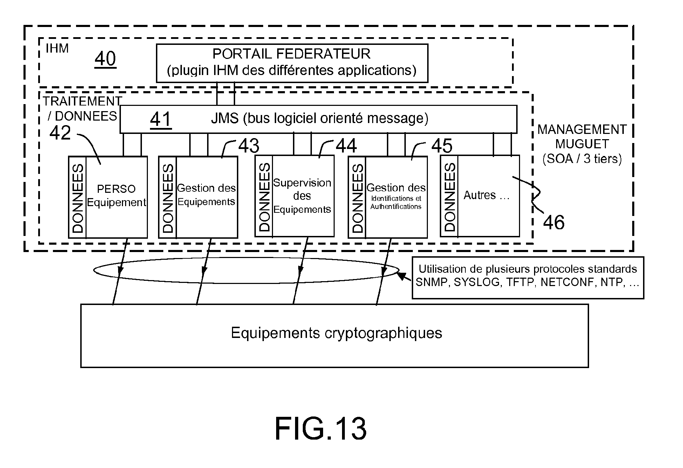

La figure 13 représente un autre exemple d'implémentation logicielle SOA orienté BUS d'échange ou ESB (Entreprise Service Bus), JMS (bus Java).

L'interface de programmation Java Message Service (JMS) permet d'envoyer et de recevoir des messages entre applications ou composants Java. Le service JMS véhicule des messages entre deux briques technologiques ou plus :
➢ soit en mode « publish and subscribe » de manière asynchrone. Dans ce cas, les entités « client / receveur » ou « serveur / producteur » ne se connaissent pas (principe de souscription à une classe de messages),
➢ soit en mode point à point (façon synchrone) où les entités se connaissent (principe de file d'attente).

Les architectures SOA permettent de mettre en oeuvre un pilotage transverse des équipements cryptographiques. Cela permet une forte évolutivité car le changement d'une brique ne modifie en rien l'ensemble du système. Cette architecture supporte des technologies hétérogènes pour peu qu'il existe une interface avec le bus java.

Ensuite, chaque brique technologique utilise la technologie d'environnement d'exécution JAVA ou JRE (Java Runtime Environment) qui est un ensemble d'outils permettant l'exécution de programmes Java sur toutes plates-formes (qui le supportent...). JRE est constitué d'une JVM (Java Virtual Machine - Machine Virtuelle Java) et d'une bibliothèque standard avec tous les programmes Java. La technologie Java est une garantie de portabilité dans les architectures client-serveur en facilitant ainsi la migration entre serveurs, très difficile pour les gros systèmes et l'intégration de nouvelles briques technologiques.

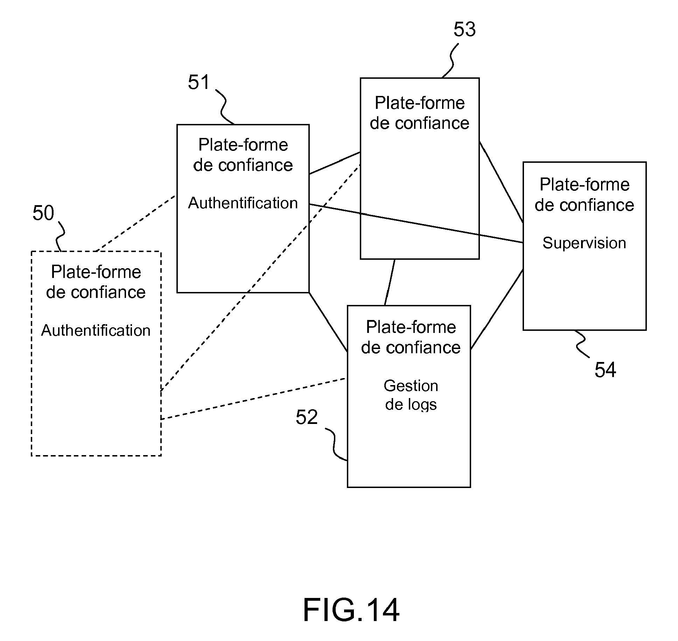

Sur cette figure 14, le système de gestion unifiée et universelle comporte une IHM ou portail fédérateur 40 permettant l'interface avec différentes applications. Cette interface IHM est en liaison avec un bus, par exemple, un bus logiciel orienté message ou JMS, 41. A partir de ce bus, l'utilisateur peut accéder à différentes applications, par exemple :
42 - la personnalisation de l'équipement, mise à la clé,...
43 - la gestion des équipements (définition des politiques de sécurité, gestion de parcs, signature de logiciels..)
44 - Supervision des équipements (gestion des incidents, des alarmes, journaux),
45 - Gestion des identifications et authentifications..
46 - autres ....

Les différentes applications communiquent avec des équipements cryptographiques 47 en utilisant des protocoles de communication standards tels que SNMP, SYSLOG, TFTP, NETCONF, NTP....

La figure 14 schématise un exemple d'implémentation matérielle répartie de confiance .

Dans cet exemple d'implémentation, le système comprend par exemple une plate-forme de confiance 50 d'authentification au service de tous les équipements si le premier chiffreur n'est pas suffisant, une plate-forme de confiance d'authentification 51 au service de tous les équipements, une plate-forme 52 pour la gestion de logs au service de tous les équipements, une plateforme de confiance 53 adaptée pour traiter les équipements qui n'ont pas forcément un service à proposer, une plateforme de confiance 54 adaptée pour la supervision au service de tous les équipements.

La présente invention permet d'ajouter autant de services / machines qu'il est nécessaire : c'est l'adaptabilité du principe mis en oeuvre par l'invention.

Les différents services peuvent être répartis sur plusieurs machines matérielles.

Le système selon l'invention est notamment compatible d'une implémentation sur :
➢ des réseaux Adhoc,
➢ des grilles assurant une répartition des données ou des services, ou GRID,
➢ des gestions des pare-feux plus connues sous l'abréviation anglo-saxonne « UTM » (Unified Threat Management) disponible à l'adresse internet http://en.wikipedia.org/wiki/Unified_Threat_Management.

Les interfaces entre les différents services doivent être sécurisées au moyen de protocoles sécurisés en regard des risques encourus (exemple : IPsec, SSL, ...)

Le système selon l'invention offre notamment les avantages suivants :
➢ Une adaptation du concept à tous types d'équipements cryptographiques (chiffreurs, terminaux, ressources, injecteurs, composants embarqués, ...)
➢ La mutualisation des services communs (authentification, journalisation, gestion des secrets, ...) :
   ➢ L'indépendance des services : structuration cohérente de composants et clarification des interfaces, services spécifiques à certains équipements, possibilité de cloisonner facilement les données et les fonctions par niveaux, identification des interfaces inter-niveaux, ...
   ➢ La capacité à externaliser facilement certains services : le concept d'administration MUGUET facilite l'externalisation de certains services : supervision, production, maintenance, sans pour autant nécessiter ou imposer des moyens totalement différents.
   ➢ Une ergonomie orientée métier de type « Look and Feel » :
      ➢ Une capacité d'évolution importante :
         ➢ Une capacité à s'interfacer avec des existants ou des systèmes externes :
            ➢ Concept applicable à un poste unique comme à une infrastructure transverse de management,
            ➢ Modèle de référence permettant de rendre cohérentes différentes architectures de management,
            ➢ Architecture permettant une répartition des opérations de management ou d'administration dans l'espace et dans le temps (intervention d'opérateurs différents à des endroits et des moments différents : préparation, exploitation, surveillance, maintenance, ...)

## Revendications

1. Système de gestion (1) unifiée et universelle d'un ou plusieurs équipements de cryptographie **caractérisé par** une architecture orientée services en ce qu'il comporte en combinaison au moins les éléments suivants :
➢ Un portail fédérateur (2) adapté et adapable au métier de l'utilisateur ou de l'opérationnel à permettre à un utilisateur d'accéder à différents services élémentaires et indépendants,
➢ Ces services élémentaires et indépendants sont des briques technologiques modulaires comprenant un ou plusieurs sous modules choisis parmi la liste suivante:
➢ Un module de gestion des Secrets (production des clés, gestion des annuaires, ...), (11.1)
➢ Un module de Gestion de la Politique de Sécurité (politique de protection, politique de contrôle d'accès, ...), (11.2)
➢ Un module OPS (11.3), politique et paramètres opérationnels (toutes informations nécessaires à l'équipement en dehors de la politique de sécurité),
➢ Un module chargé de l'Administration des équipements (pré-personnalisation, personnalisation, enregistrement, inscription,...), (11.4)
➢ Un module de Supervision (gestion des alarmes, gestion des faits techniques, des incidents et des événements non sollicités, corrélation d'événements, ...) (11.5)
➢ Un module d'Audit (contrôle de la bonne application de la Politique de Sécurité : logs, politique appliquée et remontée par les équipements, ...) (11.6)
➢ Un module de Suivi (gestion de parcs, état et localisation des équipements, ...), (11.7)
➢ Un module d'Authentification (gestion des profils utilisateurs, administrateurs, auditeurs, ... authentification des intervenants, etc....), (11.8).
➢ Une ou plusieurs interfaces (5) permettant l'échange d'informations entre le système de gestion et des équipements cryptographiques externes audit système (6, 7).

2. Système de gestion unifiée selon la revendication 1 **caractérisé en ce qu'**un module ou brique technologique est constitué de trois couches correspondant à un service unitaire.

3. Système de gestion unifiée selon la revendication 2 **caractérisé en ce qu'**il comporte au moins les trois couches suivantes : une première couche (10.1) correspondant à un module de présentation interface homme machine, une deuxième couche (10.2) correspondent aux traitements souhaités et une troisième couche (10.3) correspondant à une base de données.

4. Système de gestion unifiée selon la revendication 1 **caractérisé par** une architecture orientée services composée de briques technologiques élémentaires et indépendantes et en ce qu'il comporte un ensemble de modules adaptés à l'administration d'équipements cryptographiques et l'élaboration de « secrets » pour le domaine de la Sécurité des Systèmes d'Information comprenant un module d'authentification 11.1, un module (11.2) adapté à générer des secrets un module d'audit (11.6).

5. Système de gestion unifiée selon la revendication 1 **caractérisé en ce qu'**il comporte au moins un ensemble de briques ou de modules comprenant les modules suivants
Module 11.8 AUTH : pour s'authentifier et accéder aux services
Module 11.1 SECRET : pour accéder aux secrets produits et gérer leur affectation, générer des clés associées,
Module 11.6 AUDIT : pour consulter les journaux locaux (Logs)
Module 11.2 POLITIQUE : pour définir une politique d'accès à l'équipement (administrateurs et les droits)
Module 11. 4 ADMIN : pour fournir les données de pré-personnalisation et les affecter aux équipements
Module 11.7 SUIVI : pour maintenir à jour la base d'état des équipements (état, suivi des ACSSI, mise à jour éventuelle, ...).

6. Système selon la revendication 1 **caractérisé en ce qu'**il comporte un ensemble de briques ou de modules comprenant les modules suivants :
Module 11.8 AUTH : pour s'authentifier et accéder aux services
Module 11.1 SECRET : pour accéder aux secrets produits et gérer leur affectation, générer des clés associées,
Module 11.6 AUDIT : pour consulter les journaux locaux (Logs)
Module 11.2 POLITIQUE : pour définir une politique d'accès à l'équipement (administrateurs et les droits)
Module 11. 4 ADMIN : pour fournir les données de pré-personnalisation et les affecter aux équipements
Module 11.7 SUIVI : pour maintenir à jour la base d'état des équipements (état, suivi des ACSSI, mise à jour éventuelle, ...).

7. Système selon la revendication 1 **caractérisé en ce qu'**il comporte un ensemble de briques ou de modules comprenant les éléments suivants :
AUTH 11.8 : pour s'authentifier et accéder aux services
POLITIQUE 11.2 : pour définir les politiques des équipements (politique de chiffrement, politique de certification, politique d'accès : droits et rôles des intervenants, politique de protections, ...)
AUDIT 11.6 : pour consulter les journaux locaux (Logs).

8. Système selon la revendication 1 **caractérisé en ce qu'**il comporte un ensemble de briques ou de modules comprenant les éléments suivants :
AUTH 11.8 : pour s'authentifier et accéder aux services
AUDIT 11.6 : pour consulter les journaux locaux (Logs)
POLITIQUE 11.2 : pour accéder à la politique à attribuer à l'équipement
OPS 11.3 : pour définir les paramètres opérationnels complémentaires de l'équipements (plan de fréquence, répertoire téléphonique, table de routage, ...), paramètres liés à la mission opérationnelle de l'équipement.
ADMIN 11.4: pour fournir à l'équipements toutes les données de configuration ou mettre à jour ces paramètres.

9. Système selon la revendication 1 **caractérisé en ce qu'**il comporte un ensemble de briques composés des modules suivants :
AUTH 11.8 : pour s'authentifier et accéder aux services
POLITIQUE 11.2 : pour accéder à la politique de sécurité IPSec (partie de la politique à attribuer à l'équipement à gérer)
SECRET 11.1: pour accéder aux secrets définis et gérer leur affectation
OPS 11.3: pour définir les paramètres opérationnels complémentaires de l'équipements (table de routage IP, ...).
ADMIN 11.4 : pour inscrire les équipements sur le système de gestion, pour les personnaliser et leur fournir les fichiers de configuration, pour les piloter à distance
SUPERV 11.5 : pour disposer d'une vision, sous différentes formes, de l'état du services et des équipements en charge du service (alarmes, cartographie, voyants d'état, performances,...)
AUDIT 11.6: pour consulter les journaux et base de données des entités contribuant au maintien du service (Logs locaux, Logs d'autres entités, Logs des équipements cryptographiques supervisés, MIBs réseaux, ...) et pour vérifier que la politique appliquée est bien conforme à la politique définie ;
SUIVI 11.7: pour maintenir à jour la base d'états des équipements (états, suivi des composants sensibles, mise à jour logicielle éventuelle, ...)

10. Système selon la revendication 1 **caractérisé en ce qu'**il comporte un ensemble de briques composés des modules suivants :
AUTH 11.8 : pour s'authentifier et accéder aux services
POLITIQUE 11.2 : pour disposer de la politique sensée être appliquée par les équipements (la consigne)
AUDIT 11.6 : pour consulter les journaux et les politiques des équipements et les analyser.
